# FASCICULE DE BREVET EUROPEEN

(11) **EP 1 495 844 B1**
(45) Date de publication et mention de la délivrance du brevet: **24.08.2011**
(21) Numéro de dépôt: 04102949.7
(22) Date de dépôt: 24.06.2004
(51) Int. Cl.: B25J 9/00, B65G 47/90

(54) **Manipulateur mécanique entraîné par cames de translation et de pivotement et machine d'assemblage équipée de tels manipulateurs**
Nockenbetätigter mechanischer Manipulator für Linear- und Drehbewegung und Fertigungsmaschine mit solchen Manipulatoren
Mechanical manipulator actuated by cams for translation and rotation and assembly machine with such manipulators

(30) Priorité: 07.07.2003 FR 0308276
(43) Date de publication de la demande: 12.01.2005
(73) Titulaire: Multi Industries, 27600 Gaillon (FR)
(72) Inventeur: Blosseville, Patrick, 27600 Gaillon (FR)
(74) Mandataire: Kohn, Philippe

(56) Documents cités:
- US-A- 4 027 767
- US-A- 4 403 907
- DATABASE WPI Section PQ, Week 199103 Derwent Publications Ltd., London, GB; Class P62, AN 1991-020349 XP002295977 -& SU 1 563 966 A (M. SHMYREV; D. SOKOLYANSKIJ ; Y. BREDIKHIN) 15 mai 1990 (1990-05-15)
- PATENT ABSTRACTS OF JAPAN vol. 0090, no. 92 (M-373), 20 avril 1985 (1985-04-20) -& JP 59 217054 A (DAIDOU KOGYO KK), 7 décembre 1984 (1984-12-07)

## Description

La présente invention concerne un manipulateur mécanique destiné à équiper une machine d'assemblage ou de contrôle.

La présente invention concerne plus particulièrement un manipulateur mécanique du type comportant un arbre de sortie d'axe sensiblement vertical qui est susceptible de se déplacer en translation axiale, par rapport à un support fixe, entre une position basse et une position haute, et qui est susceptible de pivoter autour de son axe, dans un mouvement d'aller-retour entre une première position angulaire vers laquelle il est rappelé élastiquement par un moyen élastique de rappel et une seconde position angulaire, du type dans lequel le mouvement de translation et le mouvement de pivotement sont commandés chacun par un mécanisme à came comportant un profil de came et un élément suiveur de came, les deux cames de translation et de pivotement étant solidaires en rotation d'un arbre d'entrée qui est entraîné en rotation autour de son axe.

Un tel type de manipulateur, dit manipulateur "pick and place", est couramment utilisé dans des machines d'assemblage et de contrôle.

Ces machines comprennent généralement un moteur unique qui sert à l'entraînement d'un plateau d'assemblage rotatif indexé, ainsi qu'à l'entraînement de manipulateurs qui sont disposés autour du plateau d'assemblage.

L'arbre d'entrée de chaque manipulateur est généralement horizontal, et orienté sensiblement radialement par rapport à l'axe de rotation du plateau d'assemblage.

La transmission du mouvement de rotation, depuis le moteur vers les arbres d'entrée nécessite des dispositifs complexes, en particulier du fait que les arbres d'entrée sont radiaux.

De plus, la came de pivotement a généralement la forme d'une came globique qui coopère avec des galets appartenant à une portion de l'arbre de sortie, ces galets étant précontraints en contact de roulement sur les surfaces de commande de la came de pivotement.

La complexité des dispositifs de transmission de mouvement, et le montage des galets sur la came globique rendent ces manipulateurs complexes et posent des problèmes de fiabilité.

En outre, ces manipulateurs sont encombrants, ce qui limite le nombre de manipulateurs susceptibles d'être agencés autour du plateau d'assemblage, pour un diamètre déterminé du plateau d'assemblage.

On connaît du document SU-A-1563966 un manipulateur comportant un arbre de sortie d'axe sensiblement vertical qui est susceptible de se déplacer en translation axiale par rapport a un support fixe, entre une position basse et une position haute et qui est susceptible de pivoter autour de son axe, entre une première et une seconde positions angulaires, dans lequel le mouvement de translation et le mouvement de pivotement sont commandés chacun par un mécanisme à came comportant un profil de came et un élément suiveur de came, les deux cames de translation et de pivotement étant solidaires en rotation d'un arbre d'entrée qui est entraîné en rotation autour de son axe, où l'arbre d'entrée est sensiblement parallèle a l'arbre de sortie et où le profil de la came de translation est globalement transversal a l'arbre d'entrée, et dans lequel l'arbre de sortie est lié en translation a l'élément suiveur de came de translation. Le mouvement de translation est assuré par un mécanisme a came et solidaire en rotation de l'arbre d'entrée. Le mouvement de pivotement de l'arbre de sortie est assuré par un mécanisme à croix de Malte. Toutefois, le manipulateur mécanique décrit dans ce document ne permet pas un pivotement en aller-retour, car une croix de Malte sert à transformer un mouvement de rotation continu en une rotation saccadée, mais ne permet pas d'inverser la direction de rotation.L'invention vise à remédier à ces inconvénients en proposant un manipulateur plus simple, plus économique, et moins encombrant.

Dans ce but, l'invention propose un manipulateur mécanique du type décrit précédemment, dans lequel l'arbre d'entrée est sensiblement parallèle à l'arbre de sortie, en ce que le profil de la came de translation est globalement transversal à l'arbre d'entrée, et où l'arbre de sortie est lié en translation à l'élément suiveur de came de translation.

Selon d'autres caractéristiques de l'invention :
- l'élément suiveur de came de translation est monté sur un chariot mobile par rapport au support, et l'arbre de sortie est lié en translation au chariot et est libre en rotation par rapport au chariot ;
- le chariot mobile est monté coulissant axialement par rapport au support au moyen d'un rail de guidage vertical ;
- le profil de la came de pivotement est globalement parallèle à l'arbre d'entrée, et l'arbre de sortie est lié en pivotement à l'élément suiveur de came de pivotement ;
- l'élément suiveur de came de pivotement est monté sur un plateau pivotant par rapport au support, et l'arbre de sortie est lié en rotation au plateau et est monté coulissant axialement par rapport au plateau ;
- le plateau comporte au moins un doigt d'entraînement sensiblement vertical qui est solidaire en rotation du plateau, et l'arbre de sortie comporte un bras de guidage qui est solidaire en rotation et en translation de l'arbre de sortie et qui est monté à coulissement axial sur le doigt d'entraînement ;
- le doigt d'entraînement comporte deux chemins verticaux de guidage sensiblement parallèles, et le bras de guidage comporte deux galets qui sont montés libres à rotation sur le bras et qui roulent chacun sur un chemin vertical associé ;
- ledit moyen élastique de rappel est monté sur le support et est lié au plateau pivotant, de manière à solliciter le plateau

vers une position angulaire déterminée correspondant à ladite première position angulaire de l'arbre de sortie;
- au moins un élément suiveur de came est constitué par un galet monté libre à rotation sur son élément de support ;
- l'arbre d'entrée est entraîné en rotation au moyen d'une courroie crantée coopérant avec une poulie crantée d'entraînement coaxiale qui est montée sur l'arbre d'entrée ;
- les crans s'étendent globalement verticalement de manière non rectiligne, en vue d'empêcher un glissement vertical de la courroie par rapport à la poulie ;
- l'arbre de sortie est guidé en rotation et en translation par un premier palier qui est monté sur le support et par un second palier qui est monté sur le chariot mobile ;
- le profil de la came de translation est orienté globalement vers le haut, et l'extrémité de manipulation de l'arbre de sortie s'étend vers le haut, de manière que les éléments mécaniques commandant les mouvements de l'arbre de sortie du manipulateur puissent être agencés sous l'élément de support portant les pièces prévues pour être manipulées ;
- le manipulateur comporte un dispositif de verrouillage commandé qui est susceptible de coopérer avec le chariot mobile de manière à bloquer l'arbre de sortie en translation.

La présente invention propose aussi une machine, notamment pour l'assemblage et/ou le contrôle de pièces, comportant au moins un groupe de manipulateurs mécaniques agencés autour d'un plateau d'assemblage rotatif qui est entraîné en rotation autour d'un axe vertical, du type comportant un moteur principal qui entraîne en rotation les arbres d'entrée des manipulateurs, caractérisée en ce que les manipulateurs sont réalisés selon l'une quelconque des caractéristiques précédentes, et en ce que le moteur principal comporte une poulie motrice d'axe vertical qui entraîne simultanément en rotation les arbres d'entrée de tous les manipulateurs dudit groupe au moyen d'une courroie unique.

Selon d'autres caractéristiques de la machine :
- le plateau d'assemblage est entraîné en rotation par le moteur principal ;
- le plateau d'assemblage est entraîné en rotation par l'intermédiaire d'un indexeur angulaire qui comporte un arbre d'entrée sensiblement horizontal, et l'arbre d'entrée de l'indexeur est entraîné en rotation par le moteur principal, avec interposition d'un dispositif de renvoi d'angle ;
- la machine comporte au moins un galet enrouleur qui coopère avec la courroie de manière que l'arc d'enroulement de la courroie sur chaque poulie d'entraînement soit optimal ;
- les éléments mécaniques commandant les mouvements de l'arbre de sortie de chaque manipulateur sont agencés sous le niveau du plateau d'assemblage.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement un manipulateur mécanique réalisé conformément aux enseignements de l'invention et occupant sa position haute ;
- la figure 2 est vue en coupe axiale selon le plan de coupe 2-2 qui représente schématiquement le manipulateur de la figure 1 en position basse ;
- la figure 3 est une vue similaire à celle de la figure 2 qui représente schématiquement le manipulateur en position haute ;
- la figure 4 est une vue partielle de côté qui représente schématiquement le guidage d'un chariot mobile appartenant au manipulateur de la figure 1 ;
- la figure 5 est une vue partielle de dessus qui représente schématiquement le mécanisme à came de pivotement lorsque l'arbre de sortie du manipulateur occupe une première position angulaire ;
- la figure 6 est une vue similaire à celle de la figure 5 qui représente le mécanisme à came de pivotement lorsque l'arbre de sortie du manipulateur occupe une seconde position angulaire ;
- la figure 7 est une vue en perspective qui représente schématiquement une machine équipée de manipulateurs conformément aux enseignements de l'invention ;
- la figure 8 est une vue de dessous qui représente schématiquement la machine de la figure 7.

Pour la description de l'invention, on adoptera à titre non limitatif les orientations verticale et transversale selon le repère V, T indiqué aux figures.

Dans la description qui va suivre, des éléments identiques, similaires ou analogues seront désignés par les mêmes chiffres de référence.

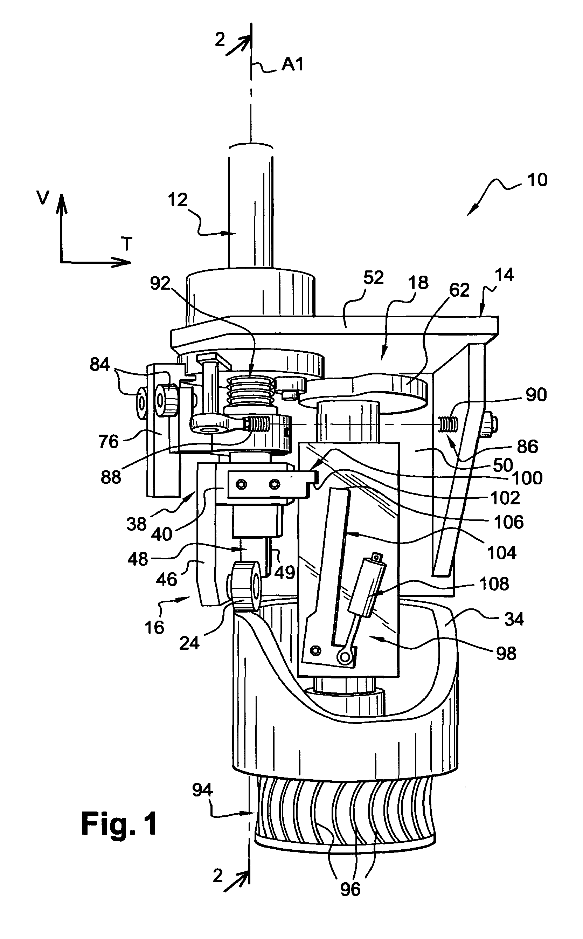

Sur les figures 1 à 3, on a représenté un manipulateur mécanique 10 qui est réalisé conformément aux enseignements de l'invention.

Le manipulateur 10 comporte un arbre de sortie 12 d'axe A1 sensiblement vertical qui est susceptible de se déplacer en translation axiale, par rapport à un support fixe 14, entre une position basse Pb et une position haute Ph, et qui est susceptible de pivoter autour de son axe A1, entre une première P1 et une seconde P2 positions angulaires.

Le mouvement de translation et le mouvement de pivotement de l'arbre de sortie 12 sont commandés chacun par un mécanisme à came 16, 18 comportant un profil de came 20, 22, qui sera désigné par "came 20, 22", et un élément suiveur de came 24, 26 associé.

Les éléments suiveurs de came 24, 26 sont liés, respectivement en translation et en pivotement, à l'arbre de sortie 12.

Chaque came 20, 22 est solidaire en rotation d'un arbre d'entrée 28 qui est entraîné en rotation autour de son axe A2, par rapport au support 14.

Selon le mode de réalisation représenté ici, le tronçon intermédiaire 30 de l'arbre d'entrée 28 est monté libre à rotation dans une boîte à roulements 32 qui est fixée sur le support 14.

La boîte à roulements 32 comporte des roulements qui permettent de guider en rotation et de retenir axialement l'arbre d'entrée 28.

Conformément aux enseignements de l'invention, l'arbre d'entrée 28 est sensiblement parallèle à l'arbre de sortie 12, ici vertical.

Le profil de la came de translation 20, ou came radiale, est globalement transversal à l'arbre d'entrée 28. La came de translation 20 est du type came cloche, c'est-à-dire que le profil de came 20 est défini par la longueur des génératrices de l'extrémité libre annulaire d'un cylindre creux coaxial à l'arbre d'entrée 28.

Selon le mode de réalisation représenté ici, la surface de commande 34 de la came de translation 20 est orientée globalement vers le haut.

La came de translation 20 est ici rapportée sur le tronçon d'extrémité inférieure 36 de l'arbre d'entrée 28 et elle est solidaire en rotation de celui-ci.

Selon une caractéristique de l'invention, l'arbre de sortie 12 est lié en translation, selon son axe vertical A1, à l'élément suiveur de came de translation 24.

A cet effet, l'élément suiveur de came de translation 24 est monté sur un chariot 38 mobile par rapport au support 14, et l'arbre de sortie 12 est lié en translation au chariot 38 et est libre en rotation par rapport au chariot 38.

Le chariot 38 comporte ici un boîtier principal 40 dans lequel sont agencés des roulements 42 de manière à former un palier inférieur pour le tronçon d'extrémité inférieure 44 de l'arbre de sortie 12.

Le palier inférieur 40 guide l'arbre de sortie 12 en rotation et il retient axialement l'arbre de sortie 12.

De plus, le chariot 38 comporte un montant 46 qui s'étend sensiblement verticalement vers le bas, à partir d'une paroi latérale du boîtier principal 40.

L'élément suiveur de came de translation 24 est constitué ici par un galet qui est monté libre à rotation, autour d'un axe radial A3, sur le montant 46, de manière qu'il soit verticalement en contact avec la surface de commande 34 de la came de translation 20 et qu'il suive le profil de la came de translation 20 en roulant sans glissement sur la surface de commande 34.

Avantageusement, le chariot 38 est guidé en coulissement axial par rapport au support 14 au moyen d'un rail de guidage vertical 48.

Le rail de guidage 48 est ici fixé sur une paroi verticale principale 50 du support 14, et il comporte deux chemins de roulement verticaux parallèles 49 qui coopèrent avec des billes (non représentées) montées dans le chariot mobile 38.

Selon le mode de réalisation représenté ici, le support 14 comporte une plaque transversale supérieure 52 munie d'un trou axial 54 pour le passage de l'arbre de sortie 12, dont l'extrémité de manipulation 56 s'étend axialement vers le haut, au-dessus de la plaque supérieure 52.

Pour simplifier la représentation de l'invention, le dispositif de manipulation prévu pour être agencé à l'extrémité de manipulation 56 de l'arbre de sortie 12 n'a pas été représenté.

De préférence, une douille 58 coaxiale à l'arbre de sortie 12 est fixée sur la face supérieure 60 de la plaque supérieure 52, de manière à guider l'arbre de sortie 12 en rotation.

La douille 58 comporte, par exemple, un coussinet autolubrifiant (non représenté) au voisinage de son extrémité axiale supérieure.

De préférence, le profil de la came de pivotement 22, ou came axiale, est globalement parallèle à l'arbre d'entrée 28.

Selon le mode de réalisation représenté ici, la surface de commande 62 de la came de pivotement 22 est orientée globalement radialement vers l'extérieur, par rapport à l'axe A2.

La came de pivotement 22 est ici rapportée sur le tronçon d'extrémité supérieure 64 de l'arbre d'entrée 28 et elle est montée solidaire en rotation de celui-ci.

Selon une caractéristique de l'invention, l'arbre de sortie 12 est lié en pivotement, autour de son axe vertical A1, à l'élément suiveur de came de pivotement 26.

A cet effet, l'élément suiveur de came de pivotement 26 est monté sur un plateau annulaire 65 pivotant autour de l'axe A1 de l'arbre de sortie 12, par rapport au support 14, et l'arbre de sortie 12 est lié en pivotement au plateau 65 et est libre en translation axiale par rapport au plateau 65.

Le plateau 65 a globalement une forme cylindrique étagée et il comporte un tronçon cylindrique supérieur 66 qui est monté libre à rotation dans le trou 54 de la plaque supérieure 48, ici au moyen de roulements 68.

Le plateau 65 est coaxial à l'arbre de sortie 12 et il est traversé de part en part par l'arbre de sortie 12, de manière que le plateau 65 ne soit pas lié directement en rotation avec l'arbre de sortie 12.

Avantageusement, l'élément suiveur de came de pivotement 26 est constitué par un galet qui est monté, libre à rotation autour d'un axe vertical A4, sous une face transversale inférieure 68 du plateau 65, de manière qu'il vienne transversalement en contact avec la surface de commande 62 de la came de pivotement 22 et qu'il suive le profil de la came de pivotement 22 en roulant sur la surface de commande 62.

Selon une caractéristique de l'invention, le plateau 65 comporte un doigt d'entraînement 70 sensiblement vertical qui est solidaire en rotation du plateau 65.

Le doigt d'entraînement 70 a ici la forme d'une équerre en "L" retourné qui est rapportée sur le plateau 65. Le doigt d'entraînement 70 comporte donc une portion sensiblement horizontale de support 72 qui s'étend sensiblement radialement vers l'extérieur, depuis un bord circonférentiel du plateau 65, et une portion sensiblement verticale 74 comprenant deux faces verticales transversales parallèles 76 qui forment respectivement deux chemins verticaux de guidage, ou chemins de roulement.

L'arbre de sortie 12 comporte un bras de guidage 78 qui est solidaire en rotation et en translation de l'arbre de sortie 12 et qui est monté à coulissement axial sur les chemins de guidage 76 du doigt d'entraînement 70.

Le bras de guidage 78, qui s'étend ici sensiblement radialement par rapport à l'arbre de sortie 12, comporte une première extrémité 80 qui est ici serrée radialement sur un tronçon de l'arbre de sortie 12 sensiblement adjacent au tronçon d'extrémité inférieure 44, et une seconde extrémité 82 en forme de plaque verticale sensiblement orthogonale aux chemins de guidage 76 du doigt d'entraînement 70.

Deux galets de guidage 84 sont montés libres à rotation, autour de deux axes transversaux parallèles aux chemins de guidage 76, sur la face externe de la plaque verticale 82, de manière qu'ils roulent chacun sur un chemin de guidage 76 associé. L'invention n'est pas limitée à cet agencement qui peut être remplacé par tous moyens équivalents, et par exemple par une inversion mécanique comportant un galet entre deux chemins de guidage.

Les deux galets de guidage 84 sont agencés de part et d'autre du doigt d'entraînement 70, et ils sont chacun en appui perpendiculairement sur le chemin de guidage 76 associé.

L'arbre de sortie 12 est donc solidaire en pivotement du plateau 65, indirectement, par l'intermédiaire du bras de guidage 78 et du doigt d'entraînement 70.

Avantageusement, un premier moyen élastique de rappel 86 est monté sur le support 14 et est lié au plateau pivotant 65, de manière à solliciter en permanence le plateau 65 vers une position angulaire déterminée.

Le premier moyen de rappel 86 est ici un ressort hélicoïdal à boudin de traction dont une première extrémité 88 est accrochée sur le plateau 65 et dont une seconde extrémité 90 est accrochée sur le support 14.

De préférence, un second moyen élastique de rappel 92 est interposé axialement, par exemple entre le plateau 65 et le bras de guidage 78, de manière à plaquer verticalement, ici vers le bas, le chariot 40 contre la surface de commande 34 de la came de translation 20.

Le second moyen de rappel 92 est ici un ressort hélicoïdal à boudin de compression.

A titre de variantes non représentées, les ressorts 86 et 92 peuvent être remplacés par des moyens équivalents tels que par exemple des vérins et ressorts à gaz.

Avantageusement, une poulie crantée d'entraînement 94 est montée coaxialement sur le tronçon d'extrémité inférieure 36 de l'arbre d'entrée 28, sous la came de translation 20, ce qui permet l'entraînement en rotation de l'arbre d'entrée 28 au moyen d'une courroie crantée (non représentée) coopérant avec la poulie 94.

De préférence, les crans 96 s'étendent globalement verticalement de manière non rectiligne, en vue d'empêcher un glissement vertical de la courroie par rapport à la poulie 94, notamment sous l'effet de la pesanteur.

Chaque cran 96 a ici une forme globalement curviligne, en vue de face, et un profil transversal sensiblement triangulaire.

Bien entendu, selon une variante de réalisation (non représentée) de l'invention, la poulie 94 peut comporter des crans 96 rectilignes et des flasques prévus pour retenir la courroie sur la poulie 94.

Avantageusement, le manipulateur 10 comporte un dispositif de verrouillage commandé 98 qui est susceptible de coopérer avec le chariot mobile 38 de manière à bloquer l'arbre de sortie 12 en translation.

Le dispositif de verrouillage 98 comporte ici une patte de butée 100 qui est fixée sur le chariot 38 et qui forme une surface radiale de butée 102, et un bras de verrouillage 104 qui est monté pivotant sur une face latérale de la boîte à roulements 32 autour d'un axe sensiblement transversal.

Le bras de verrouillage 104 est susceptible d'occuper une position verrouillée (non représentée) dans laquelle un bord d'extrémité 106 est agencé en vis-à-vis axialement de la surface de butée 102 au-dessous de celle-ci, ce qui empêche la translation vers le bas du chariot 38 et donc de l'arbre de sortie 12, au-delà d'une certaine hauteur.

Le bras de verrouillage 104 est susceptible d'occuper une position déverrouillée, qui est représentée sur la figure 1, dans laquelle le bord d'extrémité supérieure 106 est décalé globalement transversalement par rapport à la surface de butée 102, ce qui libère le chariot 38 en translation.

Le pivotement du bras de verrouillage 104 est provoqué ici par un vérin 108 commandé, dont une extrémité mobile est fixée sur une portion du bras de verrouillage 104.

On explique maintenant le fonctionnement du manipulateur 10 réalisé conformément aux enseignements de l'invention.

L'arbre d'entrée 28 est entraîné en rotation de manière continue par une courroie crantée.

Les deux cames 20, 22 sont alors entraînées simultanément en rotation avec l'arbre d'entrée 28.

Le galet de translation 24 suit le profil de la came de translation 20.

Selon le mode de réalisation représenté ici, le profil de la came de translation 20 est globalement curviligne et il comporte une portion de hauteur maximale Hmax et une portion de hauteur minimale Hmin, liées par deux portions en pentes.

Comme le galet de translation 24 est lié en translation à l'arbre de sortie 12, l'arbre de sortie 12 décrit, verticalement, le même mouvement que le galet 24.

L'arbre de sortie 12 se déplace donc verticalement d'une hauteur correspondant à la distance verticale entre la hauteur maximale Hmax et la hauteur minimale Hmin de la came de translation 20.

Lorsque l'arbre d'entrée 28 décrit un tour complet autour de son axe A2, l'arbre de sortie 12 décrit ici un aller-retour entre sa position basse Pb et sa position haute Ph, qui correspondent respectivement à la hauteur minimale Hmin et à la hauteur maximale Hmax de la came de translation 20.

A titre de variante, pour un tour complet de l'arbre d'entrée 28, l'arbre de sortie 12 effectue plusieurs allers-retours consécutifs.

Au cours de cette translation, l'arbre de sortie 12 se déplace axialement avec le bras de guidage 78 et le chariot 38.

L'arbre de sortie 12 est guidé axialement par son coulissement dans la douille 58, par le coulissement du chariot 38 sur le rail de guidage 48, et par le bras de guidage 78 dont les galets de guidage 84 suivent le doigt d'entraînement 70.

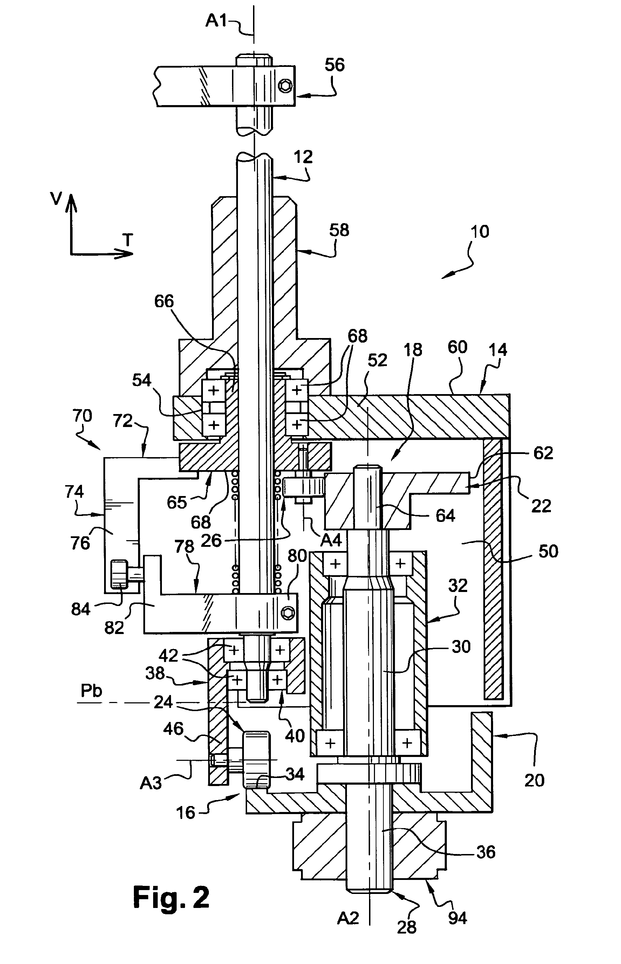

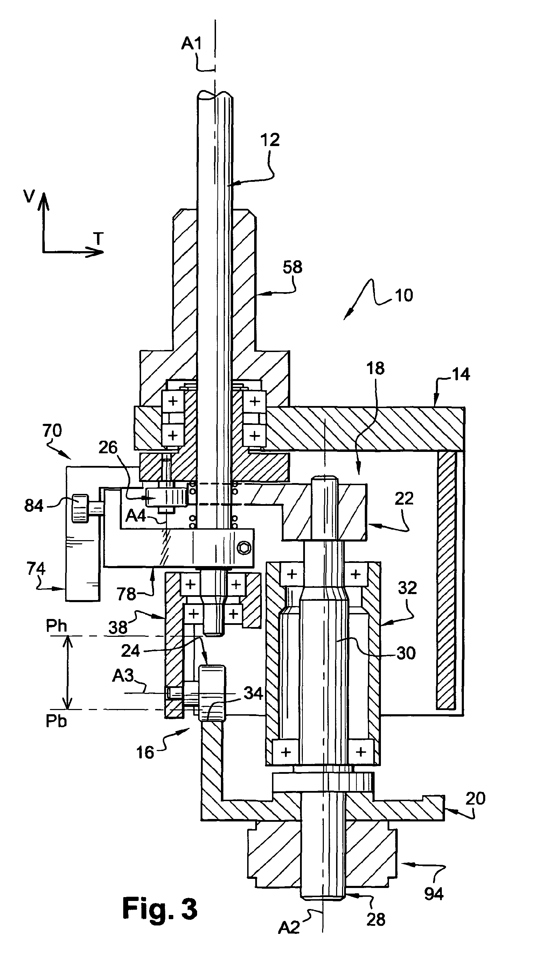

Sur la figure 3, en la comparant à la figure 2, on constate que l'arbre de sortie 12 est passé de sa position basse Pb à sa position haute Ph.

Ce déplacement a provoqué simultanément un déplacement équivalent du bras de guidage 78 par rapport au doigt d'entraînement 70 qui ne s'est pas déplacé verticalement.

Le ressort de rappel 92 sollicite en permanence le chariot 38 vers le bas. Il permet notamment de rattraper les jeux verticaux.

Le galet de pivotement 26 suit le profil de la came de pivotement 22, qui effectue une rotation complète simultanément à la came de translation 20.

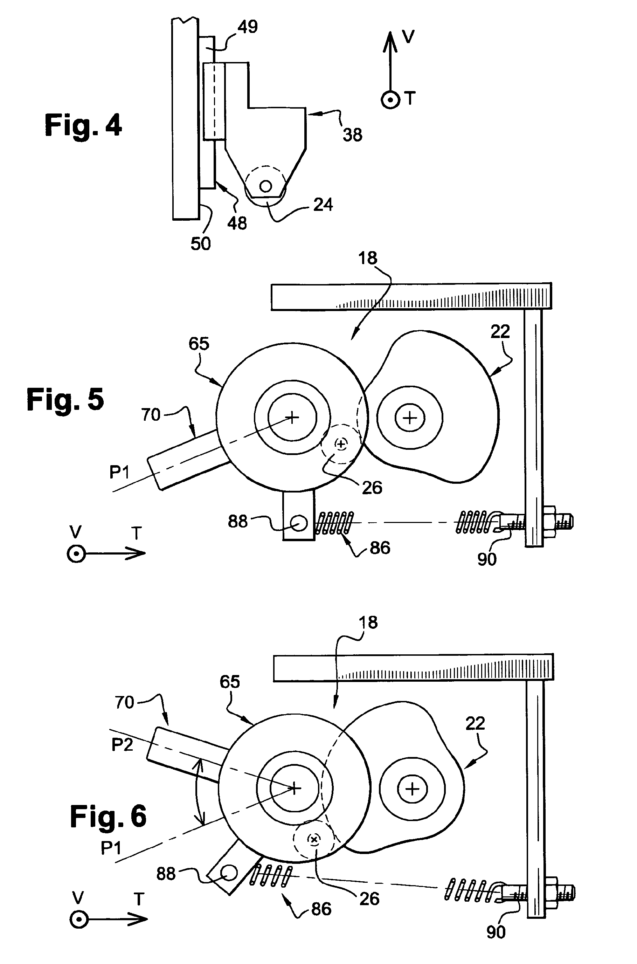

Selon le mode de réalisation représenté ici, comme on peut le voir plus particulièrement en considérant les figures 5 et 6, le profil de la came de pivotement 22 est globalement curviligne, et il comporte, par rapport à l'axe A2, une portion de rayon minimal et une portion de rayon maximal.

Par ailleurs, le premier ressort de rappel 86 maintient en permanence le galet de pivotement 26 en appui radialement contre la surface de commande 62 de la came de pivotement 22, et il sollicite le plateau 65 vers sa première position angulaire P1.

Par conséquent, lorsque le galet de pivotement 26 est en contact avec la portion de rayon minimal, la distance entre le galet de pivotement 26 et l'axe A2 de la came 22 est minimal, ce qui correspond à la première position angulaire P1 du plateau 65 (figure 5), et à une extension minimale du premier ressort 86.

Lorsque le galet de pivotement 26 est en contact avec la portion de rayon maximal, la distance entre le galet de pivotement 26 et l'axe A2 de la came 22 est maximal, ce qui correspond à la seconde position angulaire P2 du plateau 65 (figure 6), et à une extension maximale du premier ressort 86.

Simultanément au pivotement du plateau 65, l'arbre de sortie 12 est entraîné en pivotement autour de son axe A1 par l'intermédiaire du bras de guidage 78 qui est lui-même entraîné en pivotement, par rapport à l'axe A1, par l'intermédiaire du doigt d'entraînement 70.

Par conséquent, lorsque l'arbre d'entrée 28 décrit un tour complet, l'arbre de sortie 12 décrit ici au moins un aller-retour entre ses deux positions angulaires extrêmes P1, P2.

Suivant le procédé de commande du manipulateur 10, et suivant le cycle d'assemblage associé au manipulateur 10, il est possible de bloquer l'arbre de sortie 12 en position haute Ph au moyen du dispositif de verrouillage 98.

Le rail de guidage 48 permet un positionnement précis du galet de translation 24 sur la surface de commande 34 de la came de translation 20, de manière que le galet de translation 24 suive parfaitement le profil de la came de translation 20.

On note que le manipulateur 10 selon l'invention n'utilise aucune liaison à rotation par arbre cannelé, ce qui permet de s'affranchir des problèmes de jeux angulaires et d'usure associés à un tel type de liaison.

Le fonctionnement du manipulateur 10 selon l'invention a été décrit ici avec des profils de came 20, 22 déterminés. Bien entendu, ces profils 20, 22 peuvent être modifiés en fonction du mouvement de translation et/ou de pivotement souhaité pour l'arbre de sortie 12.

En particulier, le manipulateur 10 selon l'invention permet de choisir indépendamment le cycle de pivotement et le cycle de translation de l'arbre de sortie 12, simplement en choisissant un profil de came 20, 22 approprié.

Le manipulateur 10 selon l'invention permet d'obtenir une course verticale rectiligne importante de l'arbre de sortie 12, sans augmenter l'encombrement radial du manipulateur 10, tout en ayant un guidage en translation fiable et précis.

Un autre avantage du manipulateur 10 selon l'invention est qu'il permet un positionnement très précis, en translation comme en pivotement.

La précision du positionnement angulaire est obtenue notamment par la coopération du doigt d'entraînement 70 avec les galets guidage 84 qui roulent sur les chemins de guidage 76 associés, ce qui permet une liaison en pivotement sans jeu entre l'arbre de sortie 12 et le galet suiveur de came de rotation 26.

De préférence, les deux galets de guidage 84 sont montés précontraints contre les chemins de guidage 76 associés du doigt d'entraînement 70.

Un autre avantage du manipulateur 10 selon l'invention est qu'il peut être agencé sous un plateau d'assemblage. Ce type d'agencement permet d'éviter que des éléments mécaniques d'entraînement qui seraient situés au-dessus du plateau d'assemblage puissent polluer les pièces à assembler, situées sur le plateau d'assemblage, par exemple des dépôts de graisse.

Bien entendu, selon une variante de réalisation (non représentée) de l'invention, l'arbre de sortie 12 peut s'étendre verticalement vers le bas, et la surface de commande 34 de la came de translation 20 peut être orientée vers le bas.

Selon une autre variante de réalisation (non représentée), les arbres de sortie 12 et d'entrée 28 peuvent s'étendre suivant des directions parallèles non verticales.

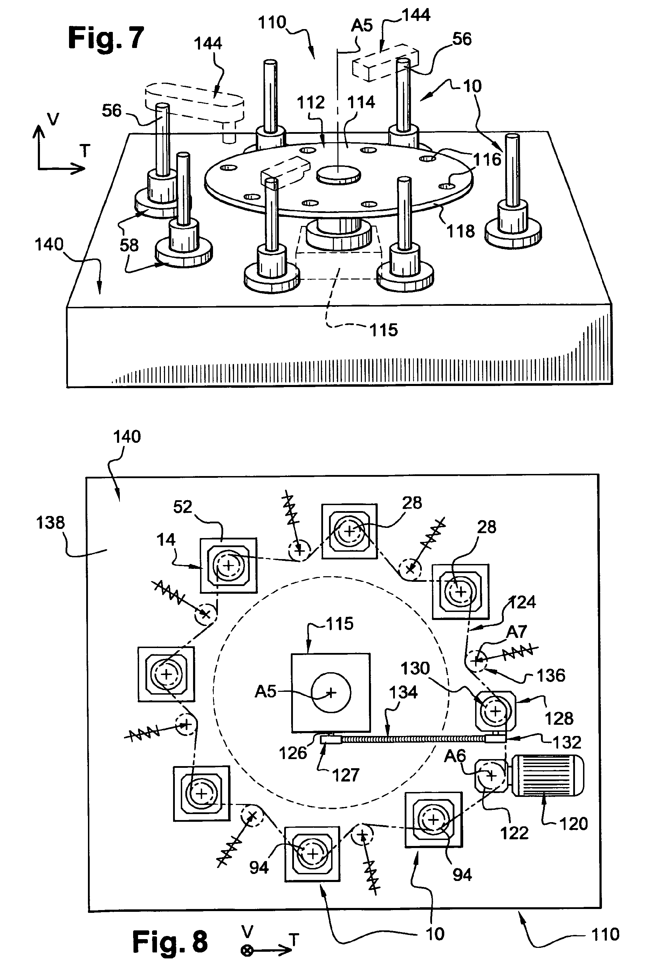

Sur les figures 7 et 8, on a représenté une machine 110 qui est réalisée conformément aux enseignements de l'invention.

Cette machine 110 est prévue notamment pour permettre l'assemblage et/ou le contrôle de pièces.

Selon un exemple d'application, la machine 110 peut réaliser l'assemblage, le remplissage, et le contrôle de flacons de produit pharmaceutique.

Conformément aux enseignements de l'invention, la machine 110 comporte plusieurs manipulateurs mécaniques 10 qui sont agencés autour d'un plateau d'assemblage rotatif 112, ici en forme de disque, entraîné en rotation autour de son axe vertical A5.

Selon le mode de réalisation représenté ici, le plateau d'assemblage 112 comporte, sur sa face supérieure 114, un nombre déterminé de réceptacles 116 qui sont prévus pour recevoir chacun un flacon ou un élément de flacon tel qu'un bouchon (non représentés).

De préférence, les réceptacles 116 sont agencés au voisinage du bord périphérique extérieur 118 du plateau d'assemblage 112, et ils sont répartis angulairement de manière régulière, par rapport à l'axe A5.

Avantageusement, le plateau d'assemblage 112 est entraîné en rotation par un indexeur angulaire 115 dont le pas angulaire correspond à l'écart angulaire entre deux réceptacles 116.

Pour une position angulaire déterminée du plateau d'assemblage 112, chaque manipulateur 10 est agencé globalement en vis-à-vis d'un réceptacle 116 associé.

Conformément aux enseignements de l'invention, la machine 110 comporte un moteur principal 120, par exemple un moteur électrique, équipé d'une poulie motrice 122 d'axe vertical A6 qui entraîne simultanément en rotation les arbres d'entrée 28 de tous les manipulateurs 10 au moyen d'une courroie principale unique crantée 124.

Bien entendu, la notion de courroie unique s'entend pour un groupe de manipulateurs qu'elle entraîne simultanément et pour lesquels elle est la courroie unique qui leur est commune. Toutefois, sans sortir du cadre de l'invention, l'arbre de sortie du moteur principal peut entraîner plusieurs courroies crantées dont chacune est associée à un groupe de manipulateurs.

Avantageusement, l'indexeur 115 est entraîné en rotation par le moteur principal 120.

Selon le mode de réalisation représenté ici, l'arbre d'entrée 126 de l'indexeur 115, qui s'étend ici suivant une direction sensiblement horizontale, comporte une poulie 127 qui est entraînée en rotation par le moteur principal 120 au moyen d'un dispositif de renvoi d'angle 128.

Le dispositif de renvoi d'angle 128 comporte une poulie principale 130 d'axe vertical qui est entraînée en rotation par la courroie principale 124, et une poulie secondaire 132 d'axe horizontal, dont la rotation est liée à la rotation de la poulie principale 130, qui entraîne en rotation la poulie 127 de l'indexeur 115 par l'intermédiaire d'une courroie secondaire 134.

De préférence, la machine 110 comporte des galets enrouleurs 136 d'axes verticaux A7 qui coopèrent avec la courroie principale 124 de manière que l'arc d'enroulement de la courroie 124 sur la poulie d'entraînement 94 de chaque manipulateur 10 soit optimal.

De préférence, les éléments mécaniques commandant les mouvements de l'arbre de sortie 12 de chaque manipulateur 10, c'est-à-dire les mécanismes à came 16, 18, ainsi que l'arbre d'entraînement 28, sont agencés sous le niveau du plateau d'assemblage 112, de même que le moteur principal 120 et la courroie principale 124.

Selon le mode de réalisation représenté ici, le support 14 de chaque manipulateur 10 est fixé sur la face inférieure 138 d'une table 140, et le plateau d'assemblage 112 est monté à rotation du côté de la face supérieure 142 de la table 140.

La plaque transversale supérieure 52 du support 14 de chaque manipulateur 10 est ici adjacente à la face inférieure 138 de la table 140, et la douille de guidage 58 est fixée ici sur la face supérieure 142 de la table 140.

La table 140 comporte donc un trou (non représenté) associé à chaque manipulateur 10 pour permettre le passage de son arbre de sortie 12.

Le fonctionnement de la machine 110 selon l'invention est suivant.

Le moteur principal 120 est alimenté en courant électrique de sorte qu'il entraîne en rotation les poulies d'entraînement 94 des manipulateurs 10 et la poulie principale 130 du dispositif de renvoi d'angle 128 par l'intermédiaire de la courroie principale 124.

La rotation des poulies d'entraînement 94 induit la rotation des arbres d'entraînement 28 associés, de sorte que les cames 20, 22 commandent les déplacements des arbres de sorties 12 associés.

La rotation de la poulie principale 130 du dispositif de renvoi d'angle 128 induit la rotation de l'indexeur 115, donc du plateau d'assemblage 112.

A chaque position angulaire indexée du plateau d'assemblage 112 correspond un mouvement de translation et/ou de pivotement de l'arbre de sortie 12 d'au moins un manipulateur 10, de sorte que l'élément de manipulation 144, par exemple une pince de préhension (non représentée), qui est agencé à l'extrémité supérieure de manipulation 56 de l'arbre de sortie 12, effectue une opération sur la pièce (non représentée) placée dans le réceptacle 116 associé.

On note que la machine 10 peut comporter des dispositifs de contrôle des pièces qui sont intercalés angulairement entre des manipulateur 10, de manière par exemple à vérifier que l'opération qui devait être effectuée par le manipulateur 10 en amont, suivant le sens de rotation, a été réalisée correctement.

La machine 10 selon l'invention présente notamment l'avantage de ne nécessiter qu'une seule courroie 124 pour entraîner tous les manipulateurs 10 d'un groupe donné de manipulateurs.

De plus, grâce à la compacité des manipulateurs 10 selon l'invention, il est possible d'agencer un grand nombre de manipulateurs 10 autour d'un plateau d'assemblage 112 de diamètre déterminé.

Grâce aux manipulateurs 10 selon l'invention, la machine 10 ne comporte pas d'éléments mécaniques d'entraînement au-dessus du plateau d'assemblage 112, ce qui permet de garantir une propreté optimale du plateau d'assemblage 112.

Une telle propreté est particulièrement avantageuse dans une application pharmaceutique telle que le remplissage et/ou la fermeture de flacons contenant un produit pharmaceutique.

Bien entendu, selon des variantes de réalisation (non représentées) de l'invention, les manipulateurs 10 selon l'invention pourraient être entraînés par d'autres systèmes d'entraînement, par exemple par une chaîne et des pignons.

## Revendications

1. Manipulateur mécanique (10) du type comportant un arbre de sortie (12) d'axe (A1) sensiblement vertical qui est susceptible de se déplacer en translation axiale, par rapport à un support fixe (14), entre une position basse (Pb) et une position haute (Ph), et qui est susceptible de pivoter autour de son axe (A1), dans un mouvement d'aller-retour entre une première position angulaire (P1) vers laquelle il est rappelé élastiquement par un moyen élastique de rappel (86) et une seconde (P2) position angulaire, du type dans lequel le mouvement de translation et le mouvement de pivotement sont commandés chacun par un mécanisme à came (16, 18) comportant un profil de came (20, 22) et un élément suiveur de came (24, 26), les deux cames (20, 22) de translation et de pivotement étant solidaires en rotation d'un arbre d'entrée (28) qui est entraîné en rotation autour de son axe (A2), dans lequel
l'arbre d'entrée (28) est sensiblement parallèle à l'arbre de sortie (12), en ce que le profil de la came de translation (20) est globalement transversal à l'arbre d'entrée (28), et où l'arbre de sortie (12) est lié en translation à l'élément suiveur de came de translation (24).

2. Manipulateur (10) selon la revendication précédente, **caractérisé en ce que** l'élément suiveur de came de translation (24) est monté sur un chariot mobile (38) par rapport au support (14), et **en ce que** l'arbre de sortie (12) est lié en translation au chariot (38) et est libre en rotation par rapport au chariot (38).

3. Manipulateur (10) selon la revendication précédente, **caractérisé en ce que** le chariot mobile (38) est monté coulissant axialement (A1) par rapport au support (14) au moyen d'un rail de guidage vertical (48).

4. Manipulateur (10) selon l'une quelconque des revendications précédentes, **caractérisé en ce que** le profil de la came de pivotement (22) est globalement parallèle à l'arbre d'entrée (28), et **en ce que** l'arbre de sortie (12) est lié en pivotement à l'élément suiveur de came de pivotement (26).

5. Manipulateur (10) selon la revendication précédente, **caractérisé en ce que** l'élément suiveur de came de pivotement (26) est monté sur un plateau (65) pivotant par rapport au support (14), et **en ce que** l'arbre de sortie (12) est lié en rotation au plateau (65) et est monté coulissant axialement par rapport au plateau (65).

6. Manipulateur (10) selon la revendication précédente, **caractérisé en ce que** le plateau (65) comporte au moins un doigt d'entraînement (70) sensiblement vertical qui est solidaire en rotation du plateau (65), et **en ce que** l'arbre de sortie (12) comporte un bras de guidage (78) qui est solidaire en rotation et en translation de l'arbre de sortie (12) et qui est monté à coulissement axial (A1) sur le doigt d'entraînement (70).

7. Manipulateur (10) selon la revendication précédente, **caractérisé en ce que** le doigt d'entraînement (70) comporte deux chemins verticaux de guidage (76) sensiblement parallèles, et **en ce que** le bras de guidage (78) comporte deux galets (84) qui sont montés libres à rotation sur le bras (78) et qui roulent chacun sur un chemin vertical (76) associé.

8. Manipulateur (10) selon l'une quelconque des revendications 5 à 7, **caractérisé en ce que** ledit moyen élastique de rappel (86) est monté sur le support (14) et est lié au plateau pivotant (65), de manière à solliciter le plateau (65) vers une position angulaire déterminée correspondant à ladite première position angulaire (P1) de l'arbre de sortie (12).

9. Manipulateur (10) selon l'une quelconque des revendications précédentes, **caractérisé en ce qu'**au moins un élément suiveur de came (24, 26) est constitué par un galet monté libre à rotation sur son élément de support (46, 68).

10. Manipulateur (10) selon l'une quelconque des revendications précédentes, **caractérisé en ce que** l'arbre d'entrée (28) est entraîné en rotation au moyen d'une courroie crantée (124) coopérant avec une poulie crantée d'entraînement coaxiale (94) qui est montée sur l'arbre d'entrée (28).

11. Manipulateur (10) selon la revendication précédente, **caractérisé en ce que** les crans (96) s'étendent globalement verticalement de manière non rectiligne, en vue d'empêcher un glissement vertical de la courroie (124) par rapport à la poulie (94).

12. Manipulateur (10) selon l'une quelconque des revendications précédentes, **caractérisé en ce que** l'arbre de sortie (12) est guidé en rotation et en translation par un premier palier (58) qui est monté sur le support (14) et par un second palier (40) qui est monté sur le chariot mobile (38).

13. Manipulateur (10) selon l'une quelconque des revendications précédentes, **caractérisé en ce que** le profil de la came de translation (20) est orienté globalement vers le haut, et **en ce que** l'extrémité de manipulation (56) de l'arbre de sortie (12) s'étend vers le haut, de manière que les éléments mécaniques (16, 18, 94) commandant les mouvements de l'arbre de sortie (12) puissent être agencés sous l'élément de support (112) portant les pièces prévues pour être manipulées.

14. Manipulateur (10) selon l'une quelconque des revendications précédentes, **caractérisé en ce qu'**il comporte un dispositif de verrouillage (98) commandé qui est susceptible de coopérer avec le chariot mobile (38) de manière à bloquer l'arbre de sortie (12) en translation.

15. Machine (110), notamment pour l'assemblage et/ou le contrôle de pièces, comportant au moins un groupe de manipulateurs mécaniques (10) agencés autour d'un plateau d'assemblage rotatif (112) qui est entraîné en rotation autour d'un axe vertical (A5), du type comportant un moteur principal (120) qui entraîne en rotation les arbres d'entrée (28) des manipulateurs (10),
**caractérisée en ce que** les manipulateurs (10) sont réalisés selon les enseignements de l'une quelconque des revendications 1 à 14, et **en ce que** le moteur principal (120) comporte une poulie motrice (122) d'axe vertical (A6) qui entraîne simultanément en rotation les arbres d'entrée (28) de tous manipulateurs (10) dudit groupe au moyen d'une courroie unique (124).

16. Machine (10) selon la revendication précédente, **caractérisée en ce que** le plateau d'assemblage (112) est entraîné en rotation par le moteur principal (120).

17. Machine (110) selon la revendication précédente, **caractérisée en ce que** le plateau d'assemblage (112) est entraîné en rotation par l'intermédiaire d'un indexeur angulaire (115) qui comporte un arbre d'entrée (126) sensiblement horizontal, et **en ce que** l'arbre d'entrée (126) de l'indexeur (115) est entraîné en rotation par le moteur principal (120), avec interposition d'un dispositif de renvoi d'angle (128).

18. Machine (110) selon l'une quelconque des revendications 15 à 17, **caractérisée en ce qu'**elle comporte au moins un galet enrouleur (136) qui coopère avec la courroie (124) de manière que l'arc d'enroulement de la courroie (124) sur chaque poulie d'entraînement (94) soit optimal.

19. Machine (110) selon l'une quelconque des revendications 15 à 18, **caractérisée en ce que** les éléments mécaniques (16, 18, 94) commandant les mouvements de l'arbre de sortie (12) de chaque manipulateur (10) sont agencés sous le niveau du plateau d'assemblage (112).

## Claims

1. Mechanical handler (10) of the type comprising an output shaft (12) with a substantially vertical axis (A1) which can be displaced in axial translation relative to a fixed support (14), between a low position (Pb) and a high position (Ph), and which can pivot around its axis (A1) in a to-and-fro movement, between a first angular position (P1) towards which it is returned resiliently by a resilient return means (86), and a second angular position (P2), of the type wherein the movement of translation and the movement of pivoting are each controlled by a cam mechanism (16, 18) comprising a cam profile (20, 22) and a cam follower element (24, 26), the two cams (20, 22) for translation and pivoting being integral in rotation with an intake shaft (28) which is rotated around its axis (A2), wherein the intake shaft (28) is substantially parallel to the output shaft (12), in that the profile of the translation cam (20) is globally transverse to the intake shaft (28), and wherein the output shaft (12) is connected in translation to the translation cam followed element (24).

2. Handler (10) according to the preceding claim, **characterised in that** the translation cam follower element (24) is fitted on a carriage (38) which is mobile relative to the support (14), and **in that** the output shaft (12) is connected in translation to the carriage (38), and is free in rotation relative to the carriage (38).

3. Handler (10) according to the preceding claim, **characterised in that** the mobile carriage (38) is fitted such as to slide axially (A1) relative to the support (14), by means of a vertical guide rail (48).

4. Handler (10) according to any one of the preceding claims, **characterised in that** the profile of the pivoting cam (22) is globally parallel to the intake shaft (28), and **in that** the output shaft (12) is connected in pivoting to the pivoting cam followed element (26).

5. Handler (10) according to the preceding claim, **characterised in that** the pivoting cam follower element (26) is fitted on a plate (65) which pivots relative to the support (14), and **in that** the output shaft (12) is connected in rotation to the plate (65), and is fitted such as to slide axially relative to the plate (65).

6. Handler (10) according to the preceding claim, **characterised in that** the plate (65) comprises at least one substantially vertical drive finger (70) which is integral in rotation with the plate (65), and **in that** the output shaft (12) comprises a guide arm (78) which is integral in rotation and in translation with the output shaft (12), and is fitted such as to slide axially (A1) on the drive finger (70).

7. Handler (10) according to the preceding claim, **characterised in that** the drive finger (70) comprises two substantially parallel vertical guide paths, and **in that** the guide arm (78) comprises two rollers (84) which are fitted such as to be free in rotation on the arm (78), and each roll on an associated vertical path (76).

8. Handler (10) according to any one of claims 5 to 7, **characterised in that** the said resilient return means (86) is fitted on the support (14), and is connected to the pivoting plate (65) such as to thrust the plate (65) towards a predetermined angular position corresponding to the said first angular position (P1) of the output shaft (12).

9. Handler (10) according to any one of the preceding claims, **characterised in that** at least one cam follower element (24, 26) is constituted by a roller which is fitted such as to be free in rotation on its support element (46, 68).

10. Handler (10) according to any one of the preceding claims, **characterised in that** the intake shaft (28) is rotated by means of an notched belt (124) which co-operates with a coaxial notched drive pulley (94) fitted on the intake shaft (28).

11. Handler (10) according to the preceding claim, **characterised in that** the notches (96) extend globally vertically in a non-rectilinear manner, in order to prevent vertical sliding of the belt (124) relative to the pulley (94).

12. Handler (10) according to any one of the preceding claims, **characterised in that** the output shaft (12) is guided in rotation and in translation by a first bearing (58) which is fitted on the support (14), and by a second bearing (40) which is fitted on the mobile carriage (38).

13. Handler (10) according to any one of the preceding claims, **characterised in that** the profile of the translation cam (20) is oriented globally upwards, and **in that** the handling end (56) of the output shaft (12) extends upwards, such that the mechanical elements (16, 18, 94) which control the movements of the output shaft (12) can be arranged under the support element (112) that bears the parts which are designed to be handled.

14. Handler (10) according to any one of the preceding claims, **characterised in that** it comprises a controlled locking device (98) which can co-operate with the mobile carriage (38), such as to block the output shaft (12) in translation.

15. Machine (110), in particular for the assembly and/or control of parts, comprising at least one group of mechanical handlers (10) arranged around a rotary assembly plate (112) which is rotated around a vertical axis (A5), of the type comprising a main motor (120) which rotates the intake shafts (28) of the handlers (10),
**characterised in that** the handlers (10) are produced according to the teaching of any one of claims 1 to 14, and **in that** the main motor (120) comprises a drive pulley (122) with a vertical axis (A6), which rotates simultaneously the intake shafts (28) of all the handlers (10) of the said group by means of a single belt (124).

16. Machine (10) according to the preceding claim, **characterised in that** the assembly plate (112) is rotated by the main motor (120).

17. Machine (110) according to the preceding claim, **characterised in that** the assembly plate (112) is rotated by means of an angular indexer (115) which comprises a substantially horizontal intake shaft (126), and **in that** the intake shaft (126) of the indexer (115) is rotated by the main motor (120), with interposition of an angle return device (128).

18. Machine (110) according to any one of claims 15 to 17, **characterised in that** it comprises at least one winding roller (136) which co-operates with the belt (124) such that the winding arc of the belt (124) on each drive pulley (94) is optimal.

19. Machine (110) according to any one of claims 15 to 18, **characterised in that** the mechanical elements (16, 18, 94) which control the movement of the output shaft (12) of each handler (10) are arranged below the level of the assembly plate (112).

## Patentansprüche

1. Mechanischer Manipulator (10) mit einer Abtriebswelle (12) der im wesentlichen vertikalen Achse (A1), die sich gegenüber einer feststehenden Halterung (14) zwischen einer unteren Position (Pb) und einer oberen Position (Ph) in axialer Linearbewegung verschieben kann, und die sich in einer Vor- und Rücklaufbewegung um ihre Achse (A1) herum drehen kann, und zwar zwischen einer ersten Winkelposition (P1), in die sie durch ein elastisches Rückholelement (86) elastisch zurückgeholt wird, und einer zweiten Winkelposition (P2), in der die Linearbewegung und die Drehbewegung jeweils durch einen Nockenmechanismus (16, 18) gesteuert werden, der ein Nockenprofil (20, 22) und eine Nockennachführung (24, 26) aufweist, wobei die beiden Nocken (20, 22) für die Linearbewegung und die Drehbewegung drehbar mit einer Antriebswelle (28) verbunden sind, die um ihre Achse (A2) drehend angetrieben wird, wobei
die Antriebswelle (28) im wesentlichen parallel zu der Abtriebswelle (12) verläuft, und das Nockenprofil für die Linearbewegung (20) im allgemeinen quer zu der Antriebswelle (28) verläuft, und die Abtriebswelle (12) mit der Nockennachführung für die Linearbewegung (24) in Linearbewegung verbunden ist.

2. Manipulator (10) nach dem vorhergehenden Anspruch, **dadurch gekennzeichnet, dass** die Nockennachführung für die Linearbewegung (24) an einem Wagen (38) montiert ist, der gegenüber der Halterung (14) beweglich ist, und dass die Abtriebswelle (12) in Linearbewegung mit dem Wagen (38) verbunden ist und gegenüber dem Wagen (38) frei drehbar ist.

3. Manipulator (10) nach dem vorhergehenden Anspruch, **dadurch gekennzeichnet, dass** der bewegliche Wagen (38) mittels einer vertikalen Führungsschiene (48) gegenüber der Halterung (14) axial verschiebbar ist.

4. Manipulator (10) nach einem der vorhergehenden Ansprüche, **dadurch gekennzeichnet, dass** das Nockenprofil für die Drehbewegung (22) im wesentlichen parallel zu der Antriebswelle (28) verläuft, und dass die Abtriebswelle (12) drehbar mit der Nockennachführung für die Drehbewegung (26) verbunden ist.

5. Manipulator (10) nach dem vorhergehenden Anspruch, **dadurch gekennzeichnet, dass** die Nockennachführung für die Drehbewegung (26) an einer Platte (65) montiert ist, die gegenüber der Halterung (14) drehbar ist, und dass die Abtriebswelle (12) drehbar mit der Platte (65) verbunden ist, und gegenüber der Platte (65) axial verschiebbar montiert ist.

6. Manipulator (10) nach dem vorhergehenden Anspruch, **dadurch gekennzeichnet, dass** die Platte (65) mindestens einen im wesentlichen vertikalen Mitnehmer (70) besitzt, der mit der Platte (65) drehbar verbunden ist, und dass die Abtriebswelle (12) einen Führungsarm (78) besitzt, der drehbar und in Linearbewegung mit der Abtriebswelle (12) verbunden ist, und der in Axialverschiebung (A1) an dem Mitnehmer (70) montiert ist.

7. Manipulator (10) nach dem vorhergehenden Anspruch, **dadurch gekennzeichnet, dass** der Mitnehmer (70) zwei, im wesentlichen parallele Führungsbahnen (76) besitzt, und dass der Führungsarm (78) zwei Laufrollen (84) aufweist, die frei drehend an dem Arm (78) montiert sind, und die sich jeweils auf einer zugehörigen vertikalen Bahn (76) befinden.

8. Manipulator (10) nach einem der vorhergehenden Ansprüche 5 bis 7, **dadurch gekennzeichnet, dass** das elastische Rückholelement (86) an der Halterung (14) montiert ist und mit der drehbaren Platte (65) verbunden ist, so dass die Platte (65) in eine bestimmte Winkelposition gedrückt wird, die der ersten Winkelposition (P1) der Abtriebswelle (12) entspricht.

9. Manipulator (10) nach einem der vorhergehenden Ansprüche, **dadurch gekennzeichnet, dass** mindestens eine Nockennachführung (24, 26) aus einer Laufrolle gebildet wird, die frei drehend an ihrem Halteelement (46, 68) montiert ist.

10. Manipulator (10) nach einem der vorhergehenden Ansprüche, **dadurch gekennzeichnet, dass** die Antriebswelle (28) mit Hilfe eines gezahnten Riemens (124) angetrieben wird, der mit einer gezahnten Scheibe mit koaxialem Antrieb (94), die an der Antriebswelle (28) montiert ist, zusammenwirkt.

11. Manipulator (10) nach dem vorhergehenden Anspruch, **dadurch gekennzeichnet, dass** die Einkerbungen (96) im wesentlichen vertikal und nicht geradlinig verlaufen, um eine vertikale Verschiebung des Riemens (124) gegenüber der Scheibe (94) zu verhindern.

12. Manipulator (10) nach einem der vorhergehenden Ansprüche, **dadurch gekennzeichnet, dass** die Abtriebswelle (12) durch ein erstes Lager (58) in Drehbewegung und in Linearbewegung geführt ist, das an der Halterung (14) montiert ist, und durch ein zweites Lager (40) geführt ist, das an dem beweglichen Wagen (38) montiert ist.

13. Manipulator (10) nach einem der vorhergehenden Ansprüche, **dadurch gekennzeichnet, dass** das Nockenprofil für die Linearbewegung (20) im wesentlichen nach oben gerichtet ist, und dass sich das Ende der Bewegung (56) der Abtriebswelle (12) nach oben erstreckt, so dass die mechanischen Elemente (16, 18, 94), die die Bewegungen der Abtriebswelle (12) steuern, unter dem Halteelement (112) angeordnet werden können, das die Teile aufweist, welche bedient werden sollen.

14. Manipulator (10) nach einem der vorhergehenden Ansprüche, **dadurch gekennzeichnet, dass** er eine gesteuerte Verriegelungsvorrichtung (98) besitzt, die mit dem beweglichen Wagen (38) zusammenwirken kann, um die Abtriebswelle (12) in der Linearbewegung zu blockieren.

15. Maschine (110), insbesondere für die Fertigung und/oder die Kontrolle von Teilen, die mindestens eine Gruppe von mechanischen Manipulatoren (10) aufweist, welche um eine drehbare Fertigungsplatte (112) herum angeordnet sind, die um eine vertikale Achse (A5) herum angetrieben wird, welche einen Hauptmotor (120) besitzt, der die Antriebswellen (28) der Manipulatoren (10) drehend antreibt,
**dadurch gekennzeichnet, dass** die Manipulatoren (10) nach der Lehre einer der Ansprüche 1 bis 14 ausgeführt werden, und dass der Hauptmotor (120) eine Antriebsscheibe (122) mit vertikaler Achse (A6) besitzt, die die Antriebswellen (28) sämtlicher Manipulatoren (10) der Gruppe mit Hilfe eines einzigen Riemens (124) gleichzeitig drehend antreibt.

16. Maschine (110) nach dem vorhergehenden Anspruch, **dadurch gekennzeichnet, dass** die Fertigungsplatte (112) durch den Hauptmotor (120) drehend angetrieben wird.

17. Maschine (110) nach dem vorhergehenden Anspruch, **dadurch gekennzeichnet, dass** die Fertigungsplatte (112) mit Hilfe eines Winkelindexierers (115) drehend angetrieben wird, der eine im wesentlichen horizontale Antriebswelle (126) besitzt, und dass die Antriebswelle (126) des Indexierers (115), mit Einschub einer Umlenkvorrichtung (128), durch den Hauptmotor (120) drehend angetrieben wird.

18. Maschine (110) nach einem der vorhergehenden Ansprüche 15 bis 17, **dadurch gekennzeichnet, dass** sie mindestens eine Führungsrolle (136) besitzt, die mit dem Riemen (124) zusammenwirkt, so dass der Umschlingungswinkel des Riemens (124) an jeder Antriebsscheibe (94) optimal ist.

19. Maschine (110) nach einem der Ansprüche 15 bis 18, **dadurch gekennzeichnet, dass** die mechanischen Elemente (16, 18, 94), die die Bewegungen der Abtriebswelle (12) eines jeden Manipulators (10) steuern, unterhalb der Fertigungsplatte (112) angeordnet sind.
